# EUROPEAN PATENT APPLICATION

(11) **EP 1 909 511 A1**
(43) Date of publication of application: **09.04.2008**
(21) Application number: 05774462.5
(22) Date of filing: 26.07.2005
(51) Int. Cl.: H04Q 7/20, H04L 29/06

(54) **APPLICATION ACTIVATION METHOD**

(71) Applicant: Lanetro Zed, s.a., 28230 Madrid (ES)
(72) Inventor: PÉREZ DOLSET, Javier, Rozabella no. 4, E-28230 Madrid (ES)
(74) Representative: Elzaburu Marquez, Alberto
(86) International application number: PCT/ES2005/070111
(87) International publication number: WO 2007/012675

(57) **Abstract**

**Summary**

Telecoms system that supports mobile terminals (11) connecting to a wireless communications network (12) for data exchange through the communications network (12, 14) to and from a server device (13) destined to provide applications on demand, remotely activating them from the application server 13 based on a user profile.

## Description

### PURPOSE OF THE INVENTION

This invention refers, in general, to a method of activating an application at a distance from a server connected to a mobile network.

### STATUS OF TECHNOLOGY

There is currently an increasing demand to transfer content on demand from specific or dedicated servers to end user mobile terminals in a mobile network.

Said servers, normally, are managed by an operator of a mobile network and/or an added value services provider for said mobile network.

.The customer accesses contents on demand making a request, so that the information request is made by sending a text message such as SMS, to a server belonging to the wireless communications network. After analyzing the request from the dedicated server, the network sends the requested information to the mobile terminal of the requesting customer.

Therefore, there is a large amount of data transfer in both directions, which requires the use of a lot of limited radio resources from the mobile communication networks.

Therefore, it is necessary to develop a process that allows activating a service or supplementary application in a mobile communication network, which implies a reduced intervention of an end user to initiate the provision of said application, an effective use of limited radio resource in the mobile communications network; functionality can be implemented in a dedicated server that reduces the amount of data to be transferred through the air to end user mobile terminals, in order to reduce the time to transfer data from the dedicated server to a mobile terminal, over radio links.

### CHARACTERIZATION OF THE INVENTION

This invention seeks to resolve or reduce one or more of the aforementioned inconveniences through an application activation method as defined in claim 1. Executions of the invention are established in the dependent claims.

One goal of the invention is to reduce data transfer between a dedicated server and a client subscribed to the service provided by said dedicated server.

Another purpose of the invention is to reduce the occupation rate of available radio resources in the wireless communication network.

Another goal of the invention is to reduce energy consumption from the battery of the end user's mobile terminal.

### BRIEF DESCRIPTION OF THE FIGURES

A more detailed explanation of the invention is provided in the following description based on the figures attached were:

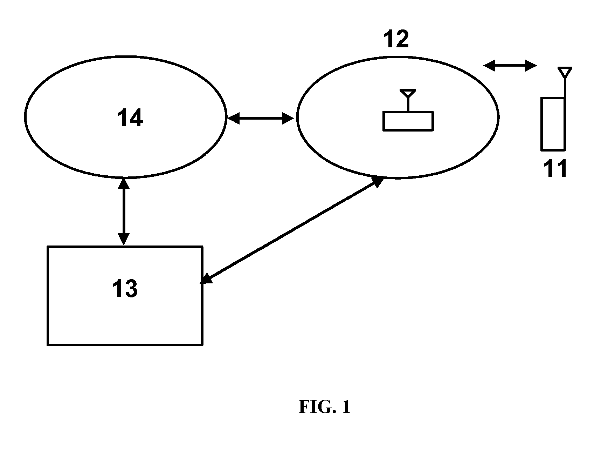

Figure 1 shows a method in accordance with the invention.

### DESCRIPTION OF THE INVENTION

With reference to figure 1, we shall describe a telecoms environment that supports mobile 11 terminals, which connect to a wireless 12 communications network.

A client device 11 is a mobile telephone for data exchange through the wireless communications network 12 to and from a service device 13; in this specific example, it is an application server device 13 destined to be provide on demand applications.

The application server 13 executes a middleware program, which acts both as server and client between the wireless communication network 12 and a telecom interconnection network 14 between the mobile terminal 11 and application server 13, in order to establish requests on behalf of the user.

The requests from the user's mobile are either served internally in the application server 13, or sending them with possible translations of requests to other servers included in the telecom network 14. Consequently, the application server 13 must interpret and, if necessary, rewrite, a user's mobile request before sending it to the telecoms network 14.

In the telecoms system displayed in figure 1, a user of the mobile terminal 11 initiates access to the transport network 14 using his mobile terminal 11 to request, for example, a specific application.

The application server 13 receives the request through the transport network 14 and attends to it if the user has previously subscribed to the applications available in the application server 13.

The user profile data can be stored by the application server 13, in order to know which applications stored on the server 13 can be requested by each subscriber.

On subscription of a client user, a computer program is downloaded to the client's mobile terminal 11, corresponding to the application requested by the user. Such download to the mobile terminal 11 can be performed from the application server 13 through the transport network or locally from a location provided for such purpose.

The application subscribed by the client user fulfils the condition that it can be initiated or activated remotely from the application server 13 using a wireless remote activation protocol, such as an over-the-air WAP OTA push connection protocol.

It should be noted that the application or applications subscribed by the user must be previously installed or stored in the user's mobile terminal 11.

The application server 13 sends an initiation message to start a given application on the user's mobile terminal 11 using the initialization communication protocol. After receiving the initiation message in the mobile terminal 11, the message received is processed and the application stored in the terminal 11 is activated. Furthermore, the client may respond to the message if necessary, with a message to be sent to the application server 13 and/or to another user through communication networks 12, 14 in order to initiate the same application on the mobile terminal 11 of another user, so that both mobile terminals are executing the same application.

The mobile terminal 11 includes electronic circuits that include a processor capable of executing an operating system to receive and process incoming messages sent from the application server 13 using the WAP OTA push protocol, for example.

The application is transferred to the user's terminal 11; such download can be performed using various transfer protocols such as Bluetooth, infrared, or similar. These applications shall be executed in the operating system of the mobile terminal 11.

Once a given client subscribes to a given application stored and executable in the mobile terminal 11, the application server 13 can send remote initialization messages to the mobile terminal 11 in order to execute the chosen application, in accordance with the initialization instructions previously provided to the application server through the mobile terminal 11 and the wireless 12 and transport 14 communications network; i.e. application server 13 stores a profile of each client user subscribed to the services the server 13 is capable of providing.

The processor of the mobile terminal 11 includes a process to determine which application must be executed in the mobile terminal depending on the message received from the application server. Obviously, the processor manages the execution of applications stored in the user's mobile terminal subscribed to the application server.

The application server 13 includes storage resources, such as RAM, to store the parameters for remotely initiating the application, which have previously provided by each client. These stored parameters can be modified on request of the subscriber.

Depending on the wishes of the subscriber, the application server 13 generates and sends a message, for example, SMS (short message service) to the user's mobile terminal 11 through the communications network 12, 14 to activate or initiate the desired application.

The chosen application is activated on reception of the SMS message by the mobile terminal 11. The OTA initiation protocol supports exchanging data between the application server 13 and mobile terminals 11 through an interface server belonging to the communications network 12, 14.

The remote activation messages are received through a predetermined port on the user's mobile terminal 11 and in the event of receiving two activation messages, each one for a different application, the process executed by the user's mobile terminal 11 processor includes guidelines that identify which application should be executed first.

The execution and examples established in this report are presented as the best explanation of this invention and its graphical application and to allow technical exports to put the invention into practice and use it. However, technology experts will realize that the aforementioned description and examples have been presented to illustrate and exclusively as an example. The description as provided is not to be considered comprehensive or limit the invention to the described manner. Many modifications and variations are possible in light of the above without extending beyond the spirit and scope of the following claims.

## Claims

1. Application activation method is a telecoms system (12, 14) that connects mobile terminals (11) to wireless communications network (12); **characterized** because the method involves the following steps:
• Establishment of a communications channel between the user's mobile terminal (11) and the application server (13) through the telecoms system (12, 14).
• Sending of a request message, which includes the identification of the desired application from the user's mobile terminal (11) to the application server (13).
• Download of the desired application on a mobile terminal (11) from the application (13)
• Processing on the user's mobile terminal (11) of a remote activation message for the desired application sent from the application server (13).

2. Method in accordance with claim 1; **characterized** because the remote activation message is an SMS short message.

3. Method in accordance with claim 2; **characterized** because the activation message is received through a predetermined port of the user's mobile terminal (11).

4. Method in accordance with claim 3; **characterized** because a decision process, stored in the user's mobile terminal (11) processor, determines which application to execute first, in the event of receiving two activation messages through the predetermined port.

5. Method in accordance with claim 4; **characterized** because during the execution of the desired application a remote activation message is generated and sent from the mobile terminal (11) to another mobile terminal (11) through the telecoms system (12, 14).

6. Application activation system that consists in a telecoms system (12, 14) that connects mobile terminals (11) to a wireless communications network (12); **characterized** because a communications channel is established between the user's mobile terminal (11) and the application server (13) through the telecoms system (12, 14); a client user sends a request message that includes the identification of the desired application from the mobile terminal (11) to the application server (13); the application server (13) downloads the desired application to the mobile terminal (11); and the mobile terminal (11) processes a distance activation message for the desired and stored application, sent from the application server (13).

7. System in accordance with claim 6; **characterized** because the activation message is received through a predetermined port of the user's mobile terminal (11).

8. System in accordance with claim 7; **characterized** because the processor of the mobile terminal (11) stores a decision procedure that determines which application to execute first, in the event of receiving two activation messages through the predetermined port.

9. System in accordance with claim 8; **characterized** because during the execution of the desired application a remote activation message is generated and sent from the mobile terminal (11) to another mobile terminal (11) through the telecoms system (12, 14).

10. Application server that executes the method in accordance with claims 1 to 6.

11. Wireless mobile terminal that executes the method in accordance with claims 1 to 6.

12. A computer legible media that has computer legible instructions for a computer to execute the method in accordance with claims 1 to 6.
